# EUROPÄISCHE PATENTSCHRIFT

(11) **EP 3 390 234 B1**
(45) Veröffentlichungstag und Bekanntmachung des Hinweises auf die Patenterteilung: **15.04.2020**
(21) Anmeldenummer: 16809395.3
(22) Anmeldetag: 12.12.2016
(51) Int. Cl.: B65B 59/02, B65B 9/04, B29C 51/36, B65B 47/10, B29C 51/20, B29B 13/02, B65B 47/02

(54) **FORMWERKZEUG MIT GETEILTER FORMSCHALE**
MOLD COMPRISING A SPLIT MOLD SHELL
MOULE PRÉSENTANT UNE COQUE EN PLUSIEURS PARTIES

(30) Priorität: 16.12.2015 DE 102015225490
(43) Veröffentlichungstag der Anmeldung: 24.10.2018
(73) Patentinhaber: GEA Food Solutions Germany GmbH, 35216 Biedenkopf-Wallau (DE)
(72) Erfinder: MEYER, Klaus, 35236 Breidenbach (DE)
(74) Vertreter: Kutzenberger Wolff & Partner
(86) Internationale Anmeldenummer: PCT/EP2016/080626
(87) Internationale Veröffentlichungsnummer: WO 2017/102643

(56) Entgegenhaltungen:
- EP-A1- 0 962 386
- EP-A1- 2 570 351
- WO-A2-2013/126760
- DE-B- 1 120 119
- DE-U1-202008 016 989
- GB-A- 1 185 150

## Beschreibung

Die vorliegende Erfindung betrifft ein Tiefziehwerkzeug für eine Verpackungsmaschine zur Herstellung einer Verpackungsmulde durch Tiefziehen einer Folienbahn, mit mindestens einer Formschale und einem Rahmen. Des Weiteren betrifft die vorliegende Erfindung eine Verpackungsmaschine aufweisend das erfindungsgemäße Werkzeug.

Verpackungsmaschinen für derartige Werkzeuge sind aus dem Stand der Technik beispielsweise aus der EP 2073970 B1, der EP 2539125 B1, der EP 0 962 386 A1, der EP 2 570 351, der DE 11 20 119 B, der DE 20 2008 016989 U1 und der WO 2012100956 A1, bekannt und werden meist als sogenannte "Form-Fill-Seal-Verpackungsmaschinen" (FFS-Verpackungs-maschinen) bezeichnet. Eine typische FFS-Verpackungsmaschine ist ein sogenannter Tiefziehautomat. Bei derartigen Verpackungsmaschinen wird in eine Folienbahn eine Verpackungsmulde durch Tiefziehen in einer Tiefziehstation eingeformt, sodann mit einem Verpackungsgut gefüllt und dann mit einer Deckelfolie in der Siegelstation verschlossen. Sowohl die Tiefziehstation als auch die Siegelstation weisen jeweils ein Unter-und/oder ein Oberwerkzeug auf, wobei mindestens ein Werkzeug der jeweiligen Station eine Matrize aufweist, in die die Folie geformt wird oder die die Verpackungsmulde beim Siegeln aufnimmt. Beim Tiefziehen verändert sich lokal die Dicke der Folie und es kann vorkommen, dass die Dicke einen kritischen Wert unterschreitet.

Es war deshalb die Aufgabe der vorliegenden Erfindung ein Tiefziehwerkzeug zur Verfügung zu stellen, mit dem die Probleme des Standes der Technik vermieden werden können.

Gelöst wird die Aufgabe mit einem Tiefziehwerkzeug gemäß Patentanspruch 1.

Die vorliegende Erfindung betrifft ein Tiefziehwerkzeug für eine Verpackungsmaschine zur Herstellung einer Verpackungsmulde durch Tiefziehen einer Folienbahn, mit mindestens einer Formschale und einem Rahmen. In der Regel weist das Tiefziehwerkzeug eine Mehrzahl von Formschalen auf, da bei Verpackungsmaschinen in der Regel eine Vielzahl von Verpackungsmulden, ein sogenanntes Format aus x Zeilen und y Spalten, gleichzeitig tiefgezogen werden.

Erfindungsgemäß weist nun jede Formschale mehrere Segmente auf, die getrennt voneinander vorgesehen sind. Beim Tiefziehen wird vorzugsweise zwischen der Formschale und der tiefzuziehenden Folie ein gewisser Unterdruck angelegt, wodurch sich die Folie anfangs elastisch, dann plastisch verformt, bis sie sich bei abgeschlossener Verformung weitestgehend an die Oberfläche der Formschale angelegt hat. Dadurch kühlt die Folie vorzugsweise ab, erstarrt und behält ihre neue Gestalt als fertige Verpackungsmulde auch nach dem Wegnehmen des Unterdrucks zumindest im Wesentlichen bei.

Die erste Stufe während der Verformung wird oftmals Anmulden genannt, wobei die anfangs im Wesentlichen plane Folie leicht in den Rahmen hinein gewölbt wird, was zumindest anfangs im Bereich elastischer Verformung der Folie geschieht und die Folie typischerweise auch noch nicht oder nur geringfügig in Kontakt mit dem oberen Bereich der Seitenwand des Rahmens kommt. Mit zunehmender Verformung kommt immer mehr Folie in Kontakt mit der Seitenwand des Rahmens, kühlt dabei lokal ab und verliert dort ihre plastische Verformungsfähigkeit, wodurch bei zunehmender Verformung sich eher die noch wärmeren Bereiche der Folie verformen als die bereits etwas abgekühlten und somit die Folie nach unten hin immer dünner wird, je tiefer sie in den Rahmen hineingezogen wird. Knapp unterhalb der oberen Kante der Seitenwand des Rahmens hat die Folie nach Abschluss des Tiefziehprozesses beispielsweise noch ca. 70% ihrer Anfangsdicke, im untersten Bereich des Seitenrandes, also am Übergang zum Boden der Verpackungsmulde jedoch beispielsweise nur noch 25%. Der mittlere Bereich des Bodens weist typischerweise eine viel größere Dicke, beispielsweise 50% Ihrer Anfangsdicke auf, als die weiter außen und in Nähe des Übergangs zur Seitenwand der Verpackung befindlichen Bereiche, zu denen oben bereits ein Beispiel gegeben ist. Im ungünstigsten Fall reißt die Folie an solchen dünnen Stellen ein oder hat dort zumindest eine geringe Formstabilität.

Der vorliegenden Erfindung liegt die Erkenntnis zugrunde, dass durch die Bewegung der Formschale und/oder mindestens eines Segments der Formschale diese der sich im Verformungsprozess befindlichen Folie entgegenkommt oder sie sogar in ihrer planen Ausgangsstellung abholt und vorzugsweise sogar in Kontakt mit der Folie tritt.

Die Folie kann durch den Kontakt oder Strahlungskälte, beispielsweise infolge Fast-Kontakt und/oder Kontakt lokal abkühlt und/oder gezielt erhitzt werden und dadurch ihre Verformungswilligkeit lokal reduziert und/oder erhöht oder konstant gehalten werden. Die Bewegungsrichtung der Formschale und/oder zumindest eines Segments wird dann so eingestellt, dass sie der Bewegung der Folie folgt, voreilt und/oder nacheilt, vorzugsweise bis die Verformung der Folie und damit der Tiefzug abgeschlossen ist.

Die tiefzuziehende Folie kann aber auch zumindest abschnittsweise an einem oder mehreren Segmenten der Formschale haften. Durch eine Bewegung der Formschale und/oder mindestens eines Segmentes der Formschale wird die Folienbahn tiefgezogen oder/und ihre Verformung behindert.

Ein Stempel, der auf der der Formschale gegenüberliegenden Seite der Folienbahn vorgesehen sein kann, kann das Tiefziehen der Verpackungsmulde insgesamt oder lokal unterstützen und/oder lokal behindern.

Mehrere dieser Segment(e) weisen einen Antrieb auf, mit dem es möglich ist, das jeweilige Segment relativ zu einem anderen Segment und/oder relativ zu dem Rahmen des Werkzeugs zu verschieben, vorzugsweise entlang einer Geraden und/oder vorzugsweise vertikal. Dadurch ist es möglich einzelne Bereiche der Folienbahn zu unterschiedlichen Zeitpunkten und/oder mit einer unterschiedlichen Geschwindigkeit und/oder um eine unterschiedliche Länge tiefzuziehen, wodurch beispielweise der Materialfluss der Folienbahn beeinflusst wird und kritische minimale Foliendicken vermieden werden und/oder gezielt Materialanhäufungen oder Ausdünnungen in der Folie erzeugt werden.

Vorzugsweise weist die Formschale mindestens ein Formschalenrandsegment auf. Dabei kann es sich um einen durchgehenden Randbereich in Form eines Rings, der nicht rund sein muss sondern beispielsweise auch vieleckig, insbesondere mit gerundeten Ecken sein kann und/oder um gerade Bereiche und/oder Eckbereiche handeln. Der Formschalenrandbereich umschließt einen oder mehrere separat davon vorgesehene Formschalen-Bodensegment(e). Vorzugsweise ist mindestens ein Folienrandsegment relativ zu mindestens einem Formschalen-Boden-Segment verschieblich vorgesehen. Beispielsweise sind das/die Ecksegment(e) relativ zu dem Formschalen-Boden verschieblich vorgesehen und können diesem beim Tiefziehen, zumindest zeitweise, vor und/oder nacheilen aber auch zumindest zeitweise gleichförmig zu diesem bewegt werden.

Erfindungsgemäss weisen mindestens zwei Segmente der Formschale jeweils einen Antrieb auf, die unabhängig voneinander betreibbar sind.

Gemäß einer bevorzugten Ausführungsform sind ein oder mehrere Segmente untereinander und/oder relativ zu dem Rahmen abgedichtet. Diese Abdichtung kann während der Bewegung der Segmente aber auch während des Stillstandes eines oder mehrerer Segmente erfolgen.

Gemäß einer bevorzugten Ausführungsform der vorliegenden Erfindung weist mindestens ein Segment der Formschale ein oder mehrere Kühl- und/oder Heizmittel auf und/oder es können Zonen gleicher oder unterschiedlicher Temperatur eingestellt werden. Dadurch kann die tiefzuziehende Folienbahn geheizt und/oder gekühlt werden, beispielsweise um Materialfluss zu verbessern oder zu vermindern. Unterschiedliche Teilbereiche der Folienbahn können gleichzeitig oder nacheinander gleich oder unterschiedlich geheizt und/oder gekühlt werden.

Gemäß einer weiteren erfindungsgemäßen oder bevorzugten Ausführungsform sind die Werkstoffe und/oder Oberflächen der Segmente zumindest teilweise unterschiedlich gestaltet, um maximalen Einfluss auf die Verformungs- und Oberflächeneigenschaften der Folie nehmen zu können.

Für den Fall, dass ein Stempel das Tiefziehen unterstützt, so kann dieser ebenfalls geheizt und/oder gekühlt werden. Vorzugsweise weist der Stempel ebenfalls Segmente auf, die separat und/oder gemeinsam geheizt und/oder gekühlt werden können.

Mindestens ein Segment des Stempels kann auch einen Antrieb aufweisen, so dass dieses separat von den anderen Segmenten verschieblich vorgesehen sein kann. Die Bewegung dieses Segments kann das Tiefziehen unterstützen. Es kann separat aber auch in Verbindung mit dem beweglichen Segment der Formschale vorgesehen sein.

Weiterhin bevorzugt weist mindestens ein Segment der Formschale des Formbodens ein reversibles Haftmittel auf. Beispielsweise ist dieses Haftmittel eine Bohrung oder eine poröse Fläche durch die ein Unterdruck zwischen der Folienbahn und dem jeweiligen Segment erzeugt werden kann, der die Folienbahn reversibel mit der Folienbahn verbindet, so dass die Folienbahn der Bewegung des Segmentes folgt und/oder auch in Richtung des jeweiligen Segments gezogen wird.

Noch ein Gegenstand der vorliegenden Anmeldung ist eine Verpackungsmaschine mit einer Tiefziehstation und einer Siegelstation und/oder einer Schneideeinrichtung, mit der Verpackungen für Verpackungsgüter hergestellt werden, wobei die Tiefziehstation das erfindungsgemäße Tiefziehwerkzeug aufweist.

Die vorliegende Erfindung betrifft eine Verpackungsmaschine nach Anspruch 6 zum Verpacken von einem Verpackungsgut, insbesondere einem Lebensmittel, vorzugsweise in einer Kunststofffolie, die auch mehrlagig und aus verschiedenen Werkstoffen bestehend ausgeführt sein kann. Die Verpackung weist eine tiefgezogene Verpackungsmulde auf, die mit dem Verpackungsgut befüllt und dann mit einem Deckel, insbesondere einer Deckelfolie verschlossen wird. Die Deckelfolie wird an die Verpackungsmulde gesiegelt. Vor dem Siegeln kann in der Verpackungsmulde ein Gasaustausch vorgenommen werden. Die Deckelfolie und/oder Zwischenfolienbahn kann ebenfalls tiefgezogen sein, auch gemäß dem Gegenstand der Erfindung. Für den Gasaustausch wird die in der noch nicht verschlossenen Verpackung vorhandene Luft teilweise abgesaugt und dadurch ein Unterdruck in der Verpackung erzeugt, der dann oder gleichzeitig durch ein anderes Gas, beispielsweise Sauerstoff, Stickstoff und/oder Kohlendioxid, ersetzt wird, wobei der Gasaustausch in der Regel in und/oder vor der Siegelstation und vor bzw. vorzugsweise nach dem Befüllen der Verpackungsmulde mit Verpackungsgut stattfindet.

Die erfindungsgemäße Verpackungsmaschine weist folglich mindestens eine Tiefziehstation auf, die über ein Unter- und/oder ein Oberwerkzeug verfügt, wobei das Unterwerkzeug unterhalb und das Oberwerkzeug oberhalb der Transportebene der Folienbahn, aus der die Verpackungsmulde geformt wird, angeordnet ist.

An der erfindungsgemäßen Verpackungsmaschine können ein oder mehrere Antriebe vorgesehen sein, die jeweils direkt oder indirekt mit einem oder mehreren der Segmente der Formschale verbunden sein können und diese relativ zueinander und/oder relativ zu dem Rahmen des Formwerkzeuges bewegen. Vorzugsweise werden die Antriebe gemeinsam mit dem Werkzeug vor bzw. nach dem Transport der Folienbahn angehoben bzw. abgesenkt. Gemäß einer weiteren bevorzugten Ausführungsform der vorliegenden Erfindung weist die Verpackungsmaschine Mittel auf, um einen oder mehrere Antriebe, die sich unmittelbar an und/oder in dem erfindungsgemäßen Tiefziehwerkzeug befinden mit Energie, beispielsweise elektrischer Energie oder Druckluft, zu versorgen. Diese(r) Antrieb(e) ist/sind insbesondere dafür vorgesehen jeweils ein oder mehrere Segmente relativ zueinander oder relativ zu dem Rahmen des Werkzeugs zu bewegen.

Gemäß einer bevorzugten Ausführungsform der vorliegenden Erfindung weist die Verpackungsmaschine Mittel auf, um die Folie für das Tiefziehen vorzubereiteten, z. B. erwärmte Folie entgegen der späteren Tiefziehrichtung, also beispielsweise nach oben vorzugsweise gezielt vorzurecken, indem die Folie beispielsweise durch ein Vakuummittel um einen bestimmt Betrag etwa domartig nach oben geführt wird, wodurch zumindest bestimmte Bereiche, beispielsweise die den späteren oberen Rand der Verpackung bildenden Bereiche plastisch vorverformt werden, um ein gezieltes ausdünnen der ansonsten eher dickeren Bereiche zu erzielen.

Ein weiterer Gegenstand, der nicht erfindungsgemäss ist, ist ein Verfahren zum Tiefziehen einer Verpackungsmulde in eine Folienbahn mit einem Tiefziehwerkzeug, mit einer Formschale, die mehrere Segmente aufweist, wobei ein Segment während des Tiefziehens relativ zu einem anderen Segment und/oder mindestens ein Segment relativ zu einem Rahmen verschoben wird.

Vorzugsweise wird die Bewegung des/der Segmente(s) so gesteuert, dass dadurch die Restfoliendicke, insbesondere in Bereichen, die sehr stark tiefgezogen werden, beispielsweise Eckabschnitte einer Verpackungsmulde, gesteuert wird. So kann beispielsweise Folienmaterial aus benachbarten Bereichen in stark tiefgezogene Bereiche fließen und dadurch verhindert werden, dass eine minimal zulässige Foliendicke unterschritten wird. Auch kann die Ausgangsfoliendicke dünner gestaltet und somit Ressourcen und Kosten gespart werden.

Vorzugsweise wird die Bewegung der Segmente und/oder die Verbindung zwischen dem Segment und Folienbahn selbsttätig gesteuert/geregelt wird, beispielweise indem ein entsprechendes Programm in der Steuerung der Verpackungsmaschine hinterlegt ist, das die Bewegung jedes beweglichen Segments steuert oder regelt. Es kann aber auch ein oder mehrere Sensoren vorhanden sein, beispielsweise ein Foliendickensensor und dass das Signal dieses Sensors zur Bewegung jedes beweglichen Segments eingesetzt wird.

Vorzugsweise wird die Folienbahn abschnittsweise/lokal gekühlt oder erwärmt. Dies erfolgt insbesondere abgestimmt auf die Bewegung des/der Segmente(s).

Im Folgenden wird die Erfindung anhand der Figuren erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Verpackungsmaschine
- **Figuren 2 - 4**: zeigen eine Ausführungsform des Tiefziehwerkzeugs

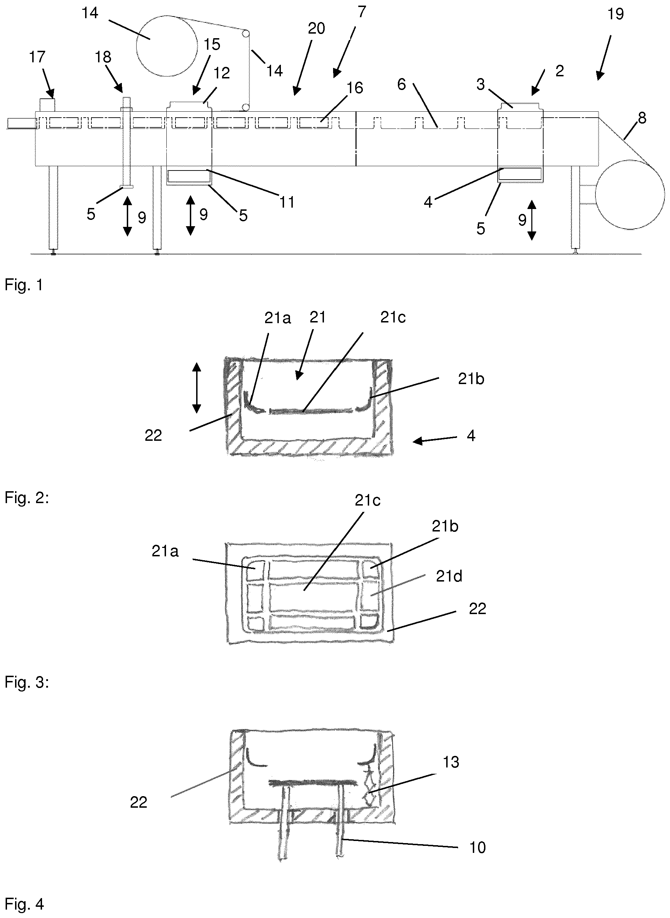

**Figur 1** zeigt die erfindungsgemäße Verpackungsmaschine 1, die eine Tiefziehstation 2, eine Füllstation 7 sowie eine Siegelstation 15 aufweist. Eine Kunststofffolienbahn 8, die sogenannte Unterfolienbahn, wird von einer Vorratsrolle abgezogen und, vorzugsweise taktweise, entlang der erfindungsgemäßen Verpackungsmaschine hier von rechts nach links transportiert. Bei einem Takt wird die Folienbahn um eine Formatlänge weitertransportiert. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils mit einer Kante der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Einlaufbereich 19 und/oder im Auslaufbereich können miteinander, vorzugsweise durch eine starre Welle, verbunden sein. Jedes Transportmittel weist eine Vielzahl von Klemmmitteln auf, die die Unterfolienbahn 8 im Einlaufbereich klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn wieder gelöst. In der Tiefziehstation 2, die vorzugsweise über ein Oberwerkzeug 3 und erfindungsgemäß ein Unterwerkzeug 4 verfügt, das die Form der herzustellenden Verpackungsmulde aufweist, werden die Verpackungsmulden 6 in die Unterfolienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolienbahn auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolienbahn 14 kann tiefgezogen und/oder in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu dem Transportmitteln der Unterfolienbahn gemacht wurden. Im weiteren Verlauf der Verpackungsmaschine werden auch die fertiggestellten Verpackungen vereinzelt, was mit dem Schneidwerkzeugen 17, 18 erfolgt. Das Schneidwerkzeug 18 ist in dem vorliegenden Fall ebenfalls mit einer Hubeinrichtung 9 anhebbar bzw. absenkbar. Der Fachmann erkennt, dass bei einem Takt vorzugsweise mehrere Verpackungsmulden tiefgezogen, befüllt und verschlossen werden.

Die **Figuren 2 und 3** zeigen eine Ausführungsform des erfindungsgemäßen Tiefziehwerkzeugs 4, hier des Unterwerkzeugs. Dies weist einen Rahmen 22 auf, in dem sich mindestens eine, vorzugsweise mehrere Formschalen 21 befinden, die als Matrize für die tiefzuziehende Folienbahn dienen. Erfindungsgemäß ist diese Formschale nun mehrteilig ausgeführt, d.h. sie weist mehrere Segmente 21a bis 21d auf, die zumindest teilweise unabhängig voneinander, relativ zueinander und/oder relativ zu dem Rahmen verschiebbar, insbesondere wie durch den Doppelpfeil dargestellt, in vertikaler Richtung verschiebbar vorgesehen sind. In dem vorliegenden Fall weist die Formschale einen Formalschalen-Boden 21c sowie Formschalen-Ecksegmente 21a, 21 b sowie einen Formschalen-Rand 21 d auf. Die Segmente 21a, b, d sind vorzugsweise relativ zu dem Formschalen-Boden 21c verschieblich vorgesehen. Dafür weisen die Segmente jeweils einzeln oder gemeinsam einen Antrieb auf, mit dem sie insbesondere rauf und runter bewegt werden können. Desweiteren sind die Segmente und/oder die Formschale 21 so vorgesehen, dass sie Mittel aufweist, mit dem die Folienbahn reversibel mit einem oder mehreren Segmenten der Formschale verbindbar ist. Dadurch wird erreicht, dass die Bewegung der Segmente auf die Folienbahn übertragen wird. Vorzugsweise wird die Bewegung der Segmente so gesteuert, dass die Unterschreitung einer minimalen Foliendicke verhindert wird. Dafür kann der Antrieb der Segmente, beispielsweise so vorgesehen sein, dass die Segmente 21a, b, d der Bewegung des Bodensegments zumindest zeitweise nach- und/oder voreilen und/oder mit dieser gleichförmig ist. Es ist auch vorstellbar, dass lediglich die Segmente 21a, b, d verschieblich zu dem Segment 21c vorgesehen sind, dass auch starr in dem Rahmen vorgesehen sein kann.

**Figur 4** zeigt eine weitere Darstellung des Werkzeugs gemäß den Figuren 2 und 3. In dem vorliegenden Fall ist der Antrieb der Segmente dargestellt. Es ist zu erkennen, dass der Formschalenboden 21c einen anderen Antrieb 10 aufweist, als die Randsegmente 21 a, b, d. In dem vorliegenden Fall weist der Formschalen-Boden einen Antrieb auf, der außerhalb des Werkzeugs vorgesehen ist, wobei die Bewegung des Antriebs auf den Formschalen-Boden mittels eines Gestänges 10 übertragen wird. Der Antrieb eines oder mehrerer Formschalen-Ecken ist durch einen Antrieb vorgesehen, der sich vorzugsweise innerhalb des Werkzeuges befinden. In dem dargestellten Fall ist der Antrieb 13 als sogenannte Nürnberger-Schere ausgebildet, wobei der Fachmann versteht, dass der Antrieb auch anders ausgeführt sein kann. Die Antriebe 10, 13 sind vorzugsweise unabhängig voneinander betreibbar.

Vorzugsweise weist die erfindungsgemäße Verpackungsmaschine eine Steuerung/Regelung auf, die die Bewegung der Segmente der Formschale automatisch regelt, beispielsweise aufgrund eines vorgegebenen Rezepts und/oder aufgrund der Messung eines Sensors.

### Bezugszeichenliste:

- 1: Verpackungsmaschine
- 2: Formstation, Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation
- 8: Folienbahn, Unterfolienbahn
- 9: Hubeinrichtung
- 10: Antrieb, Höhenverstellung
- 11: Unterwerkzeug der Siegelstation
- 12: Oberwerkzeug der Siegelstation
- 13: Antrieb, Höhenverstellung
- 14: Oberfolienbahn, Deckelfolie
- 15: Siegelstation
- 16: Verpackungsgut
- 17: Längsschneider
- 18: Querschneider
- 19: Einlaufbereich
- 20: Einlegestation
- 21: Formschale
- 21a: Segment der Formschale, Formschalenrand, Formschalen-Ecke
- 21b: Segment der Formschale, Formschalenrand, Formschalen-Ecke
- 21c: Segment der Formschale, Formschalen-Boden
- 21d: Segment der Formschale, Formschalenrand
- 22: Rahmen

## Patentansprüche

1. Tiefziehwerkzeug (4) für eine Verpackungsmaschine (1) zur Herstellung einer Verpackungsmulde (6) durch Tiefziehen einer Folienbahn (8), mit mindestens einer Formschale (21) und einem Rahmen (22), **dadurch gekennzeichnet, dass** jede Formschale mehrere Segmente 21a - d) aufweist, von denen mindestens zwei Segmente (21a, 21c) jeweils einen Antrieb (10, 13) aufweisen, mit dem es relativ zu dem anderen Segment und/oder dem Rahmen verschiebbar ist, wobei die Antriebe unabhängig voneinander betreibbar sind.

2. Tiefziehwerkzeug (4) nach Anspruch 1, **dadurch gekennzeichnet, dass** die Formschale (21) mindestens ein Formschalenrandsegment (21a, 21b, 21d), relativ zu dem Formschalen-Boden (21c) verschieblich vorgesehen ist.

3. Tiefziehwerkzeug (4) nach einem der voranstehenden Ansprüche, **dadurch gekennzeichnet, dass** die Segmente untereinander und/oder relativ zu dem Rahmen (22) abgedichtet sind.

4. Tiefziehwerkzeug (4) nach einem der voranstehenden Ansprüche, **dadurch gekennzeichnet, dass** mindestens ein Segment ein Kühl- und/oder Heizmittel aufweist.

5. Tiefziehwerkzeug nach einem der voranstehenden Ansprüche, **dadurch gekennzeichnet, dass** mindestens ein Segment ein reversibles Haftmittel aufweist.

6. Verpackungsmaschine (1) mit einer Tiefziehstation (2) und einer Siegelstation (19) und/oder einer Schneideeinrichtung (27), mit der Verpackungen für Verpackungsgüter hergestellt werden, wobei die Tiefziehstation ein Tiefziehwerkzeug gemäß einem der voranstehenden Ansprüche aufweist.

## Claims

1. Thermoforming tool (4) for a packaging machine (1) for producing a packaging recess (6) by thermoforming a film web (8), having at least one mould shell (21) and a frame (22), **characterized in that** each mould shell has a plurality of segments (21a - d), of which at least two segments (21a, 21c) have a respective drive (10, 13) by means of which they can be displaced relative to the other segment and/or the frame, wherein the drives can be operated independently of each other.

2. Thermoforming tool (4) according to Claim 1, **characterized in that** the mould shell (21) at least one mould shell edge segment (21a, 21b, 21d) is provided so as to be displaceable relative to the mould shell bottom (21c).

3. Thermoforming tool (4) according to either of the preceding claims, **characterized in that** the segments are sealed off from each other and/or relative to the frame (22).

4. Thermoforming tool (4) according to one of the preceding claims, **characterized in that** at least one segment has a cooling and/or heating means.

5. Thermoforming tool according to one of the preceding claims, **characterized in that** at least one segment has a reversible adhering means.

6. Packaging machine (1) having a thermoforming station (2) and a sealing station (19) and/or a cutting device (27), by means of which packagings for packaged goods are produced, wherein the thermoforming station has a thermoforming tool according to one of the preceding claims.

## Revendications

1. Outil d'emboutissage profond (4) destiné à une machine d'emballage (1) pour réaliser une cavité d'emballage (6) par emboutissage profond d'une bande de film (8), ledit outil d'emboutissage profond comprenant au moins une coque de formage (21) et un cadre (22), **caractérisé en ce que** chaque coque de formage comporte une pluralité de segments (21a-d) dont au moins deux segments (21a, 21c) comporte chacun un entraînement (10, 13) permettant de faire coulisser un segment par rapport à l'autre et/ou par rapport au cadre, les entraînements pouvant fonctionner indépendamment les uns des autres.

2. Outil d'emboutissage profond (4) selon la revendication 1, **caractérisé en ce que** la coque de formage (21) au moins un segment de bord (21a, 21b, 21d) de la coque de formage est prévu pour coulisser par rapport au fond (21c) de la coque de formage.

3. Outil d'emboutissage profond (4) selon l'une des revendications précédentes, **caractérisé en ce que** les segments sont étanches les uns par rapport des autres et/ou par rapport au cadre (22).

4. Outil d'emboutissage profond (4) selon l'une des revendications précédentes, **caractérisé en ce qu'**au moins un segment comporte un moyen de refroidissement et/ou de chauffage.

5. Outil d'emboutissage profond selon l'une des revendications précédentes, **caractérisé en ce qu'**au moins un segment comporte un adhésif réversible.

6. Machine d'emballage (1) équipée d'un poste d'emboutissage profond (2) et d'un poste de scellement (19) et/ou d'un dispositif de coupe (27), laquelle machine d'emballage permet de produire un emballage destiné à emballer des articles, le poste d'emboutissage profond comportant un outil d'emboutissage profond selon l'une des revendications précédentes.
